# EUROPÄISCHE PATENTSCHRIFT

(11) **EP 2 746 339 B1**
(45) Veröffentlichungstag und Bekanntmachung des Hinweises auf die Patenterteilung: **12.11.2014**
(21) Anmeldenummer: 12197634.4
(22) Anmeldetag: 18.12.2012
(51) Int. Cl.: C08L 77/00, C08L 77/06, C08K 7/14

(54) **Polyamid-Formmasse und hieraus hergestellte Formkörper**
Polyamide form mass and moulded parts produced from same
Masse de formage en polyamide et corps de formage fabriqué à partir de cette masse

(43) Veröffentlichungstag der Anmeldung: 25.06.2014
(73) Patentinhaber: EMS-PATENT AG, 7013 Domat / Ems (CH)
(72) Erfinder: Bayer, Andreas, Dr., 7013 Domat/Ems (CH); Lamberts, Nikolai, 7402 Bonaduz (CH); Hoffmann, Botho, 7013 Domat/Ems (CH); Hewel, Manfred, Dr., 7013 Domat/Ems (CH); Thomas, Oliver, Dr., 7013 Domat/Ems (CH)
(74) Vertreter: Pfenning, Meinig & Partner GbR

(56) Entgegenhaltungen:
- EP-A1- 2 535 365
- EP-A2- 0 509 282
- EP-A2- 0 532 963

## Beschreibung

Die vorliegende Erfindung betrifft wärmealterungsbeständige Polyamid-Formmassen auf Basis teilkristalliner, teilaromatischer Polyamide sowie hieraus hergestellte Formkörper.

Thermoplastische Polyamide werden häufig in Form von glasfaserverstärkten Formmassen als Konstruktionswerkstoffe für Bauteile, die während ihrer Lebensdauer erhöhten Temperaturen ausgesetzt sind, eingesetzt, wobei es zu thermooxidativen Schädigungen kommt. Durch Zusatz von bekannten Wärmestabilisatoren kann das Auftreten der thermooxidativen Schädigung zwar hinausgezögert, nicht aber dauerhaft verhindert werden, was sich z.B. in einem Abfallen der mechanischen Kennwerte äußert.

Neben der Wärmealterungsbeständigkeit spielen für den Einsatz dieser Polyamidformmassen in der Praxis die, durch die Schmelzpunkte und Glasübergangstemperaturen bedingten, Verwendungstemperaturen eine wichtige Rolle.

Die US 2009/0127740 A1 beschreibt ein Verfahren zur Herstellung eines aus mindestens zwei aneinander haftenden Teilen bestehenden Bauteils, wobei mindestens ein Teil aus einem Blend aus teilaromatischem und aliphatischem Polyamid gebildet ist. Hierbei wird in der bevorzugtesten Variante 65 bis 95 Gew.-% teilaromatisches Polyamid (A) mit 5 bis 35 Gew.-% aliphatischem Polyamid (B) gemischt, um die Haftung thermoplastisch aufeinander geformter Teile, hergestellt auf Basis teilaromatischen Polyamidformmassen, zu verbessern. Das rein aliphatische Polyamid (B) ist immer Bestandteil der Formmassen, von Blends aus teilaromatischen Formmassen wird weggelehrt. Über eine gute Hitzestabilität, oder erhöhte Schmelzpunkte und Glasübergangstemperaturen dieser Formmassen wird nicht berichtet

Zur Verbesserung der Verarbeitbarkeit teilaromatischer Polyamide des Typs PA9T schlägt die US 2003/0023008 A1 vor, spezifische aliphatische Polyamide mit einem Kohlenstoff/Amid-Verhältnis von 7 bis 12 in einer Konzentration von 10 bis 50 Gew.-% zu zumischen. Durch diese Maßnahme soll die Glas- und die Kristallisationstemperatur von PA9T unter Beibehaltung der Schmelztemperatur deutlich gesenkt werden können, womit tiefere Formtemperaturen und somit eine konventionelle Beheizung der Spritzgussformen ermöglicht werden.

Es ist daher Aufgabe der vorliegenden Erfindung, Polyamidformmassen auf Basis teilkristalliner, teilaromatischer Polyamide zur Verfügung zu stellen, aus denen bevorzugt Bauteile für den Automobil- sowie den Elektro /Elektronikbereich hergestellt werden können, die sich insbesondere durch eine gegenüber den Formmassen aus dem Stand der Technik erhöhten Glasübergangstemperatur und einen erhöhten Schmelzpunkt bei vergleichbar guter Wärmealterungsbeständigkeit auszeichnen.

Diese Aufgabe wird gelöst durch Polyamidformmassen mit folgender Zusammensetzung:
(A) 27 bis 84,99 Gew.-% einer Polyamidmischung bestehend aus
   (A1) mindestens einem teilaromatischen, teilkristallinen sich von Copolyamid 6.T/6 unterscheidenden Polyamid mit einem Schmelzpunkt im Bereich von 255 bis 330°C,
   (A2) mindestens einem Copolyamid 6.T/6 mit einem Gehalt an Caprolactam von wenigstens 30 Gew.-%,
      wobei der Gesamtcaprolactamgehalt, d.h. die Summe des in Polyamid (A1) und Copolyamid (A2) enthaltenen Caprolactams, 3 bis 21,9
   Gew.-%, bezogen auf die Polyamidmischung, beträgt,
(B) 15 bis 65 Gew.-% mindestens eines Füll- und Verstärkungsmittels,
(C) 0,01 bis 3,0 Gew.-% mindestens eines Wärmestabilisators,
(D) 0 bis 5,0 Gew.-% mindestens eines Additivs,
   wobei sich die Komponenten (A) bis (D) auf 100 Gew.-% ergänzen und,
   wobei der Polyamid-Formmasse keine Metallsalze und/oder Metalloxide eines Übergangsmetalls der Gruppe VB, VIB, VIIB oder VIIIB des Periodensystems zugesetzt sind.

Die erfindungsgemäßen Formmassen zeichnen sich überraschenderweise durch hohe Schmelzpunkte und Glasübergangstemperaturen aus, die eine Verwendung bei höheren Temperaturen möglich machen. Gleichzeitig erweichen die erfindungsgemäßen Formmassen erst bei hohen Temperaturen.

So weisen die erfindungsgemässen Formmassen auch bei Temperaturen von mindestens 93°C, bevorzugt von mindestens 98°C und besonders bevorzugt von mindestens 105°C einen Speichermodul von >1000 MPa auf.

Ausserdem besitzen die erfindungsgemäßen Formmassen vergleichbar gute Wärmealterungseigenschaften wie die Formmassen aus dem Stand der Technik bei Temperaturen von wenigstens 180°C, insbesondere bei Temperaturen von über 200°C und besitzen eine Wärmeformbeständigkeit (HDT A) von wenigstens 220°C, bevorzugt von wenigstens 240°C.

Erfindungsgemäß wird als Bestandteil (A1) der Polyamidmischung bzw. Polyamidmatrix (A) ein teilaromatisches und gleichzeitig teilkristallines Polyamid mit einem Schmelzpunkt im Bereich von 255 bis 330°C verwendet. Der Schmelzpunkt von Polyamiden hängt dabei im Wesentlichen nur bedingt vom Molekulargewicht bzw. der intrinsischen Viskosität der Polyamide ab, sondern wird vielmehr durch die chemische Zusammensetzung durch Wahl der entsprechenden Monomere bedingt. Somit können die für die Erfindung einsetzbaren Polyamide über einen breiten Bereich variieren, vorausgesetzt, dass ihr Schmelzpunkt im zuvor genannten Bereich liegt. Die Schmelzpunkte für die jeweiligen teilaromatischen und teilkristallinen Polyamide sind tabellarisierte Standard-Parameter für die jeweiligen Polyamide, können aber auch anhand einfacher Versuche nachvollzogen werden.

Unter einem Copolyamid 6.T/6 ist ein Polyamid zu verstehen, das durch Copolymerisation/-polykondensation von Caprolactam mit Hexamethylendiamin und Terephthalsäure herstellbar ist. Der Caprolactamanteil im Copolyamid 6.T/6 beträgt im Sinne der vorliegenden Erfindung mindestens 30 mol-%, bevorzugt mindestens 50 mol-% und insbesondere bevorzugt mindestens 60 mol-%. Der Caprolactamanteil im Copolyamid 6.T/6 beträgt hingegen höchstens 90 %, bevorzugt höchstens 80%.

Dem teilkristallinen, teilaromatischen Polyamid (A1) wird ein Copolyamid 6.T/6 zugesetzt, so dass der Caprolactamgehalt der Polyamidmatrix vorzugsweise 5 bis 20 und insbesondere bevorzugt 7 bis 18 Gew.-% beträgt. Durch zu hohe Konzentrationen an Caprolactam werden die Glasübergangstemperaturen und Schmelzpunkte zu stark abgesenkt.

Die erfindungsgemäßen Polyamidformmassen enthalten 27 bis 84,99 Gew.-%, bevorzugt 30 bis 79,9 Gew.-%, insbesondere bevorzugt 35 bis 70 Gew.-%, einer Polyamidmatrix bestehend aus teilkristallinen, teilaromatischen von Copolyamid 6.T/6 verschiedenen Polyamiden (A1) mit einem Schmelzpunkt von 255 bis 330°C und Copolyamiden 6.T/6 (A2).

Bevorzugt ist die erfindungsgemäße Formmasse frei von Polyolefinen, insbesondere frei von Polyethylen-α-olefin-copolymeren.

Bei der Komponente (A1) handelt es sich um teilkristalline, teilaromatische Polyamide, welche bevorzugtermassen eine Glasübergangstemperatur im Bereich von 90 bis 140°C, bevorzugt im Bereich von 110 bis 140°C und insbesondere im Bereich von 115 bis 135°C besitzen.

Der Schmelzpunkt des Polyamids (A1) liegt im Bereich von 255 bis 330°C, bevorzugt im Bereich von 270 bis 325°C und insbesondere im Bereich von 280 bis 320°C.

Bevorzugte teilaromatische teilkristalline Polyamide sind dabei aus
a) 30 bis 100 mol-%, insbesondere 50 bis 100 mol-% Terephthalsäure und/oder Naphthalindicarbonsäure sowie 0 bis 70 mol-%, insbesondere 0 bis 50 mol-% mindestens einer aliphatischen Dicarbonsäure mit 6 bis 12 Kohlenstoffatomen, und/oder 0 bis 70 mol-%, insbesondere 0 bis 50 mol-% mindestens einer cycloaliphatischen Dicarbonsäure mit 8 bis 20 Kohlenstoffatomen, und/oder 0 bis 50 mol-% Isophthalsäure, bezogen auf die Gesamtmenge der Dicarbonsäuren
b) 80 bis 100 mol-% mindestens eines aliphatischen Diamins mit 4 bis 18 Kohlenstoffatomen, vorzugsweise mit 6 bis 12 Kohlenstoffatomen sowie 0 bis 20 mol-% mindestens eines cycloaliphatischen Diamins, vorzugsweise mit 6 bis 20 Kohlenstoffatomen, und/oder 0 bis 20 mol-% mindestens eines araliphatischen Diamins, wie z.B. PACM, MACM, IP-DA, MXDA und PXDA, bezogen auf die Gesamtmenge der Diamine, sowie gegebenenfalls
c) Aminocarbonsäuren und/oder Lactamen mit je 6 bis 12 Kohlenstoffatomen,
hergestellt.

Gemäß einer bevorzugten Ausführungsform wird dabei das teifaromatische Polyamid der Komponente (A1) auf Basis von wenigstens 30 Mol-%, insbesondere von wenigstens 50 Mol-% Terephthalsäure und wenigstens 80 Mol-% aliphatischen Diaminen mit 4 bis 18 Kohlenstoffatomen, vorzugsweise mit 6 bis 12 Kohlenstoffatomen, und gegebenenfalls weiteren aliphatischen, cycloaliphatischen und aromatischen Dicarbonsäuren sowie Lactamen und/oder Aminocarbonsäuren, gebildet. Als weitere aromatische Dicarbonsäuren können neben der Terephthalsäure Isophthalsäure und Naphthalindicarbonsäure verwendet werden. Geeignete aliphatische und cycloaliphatische Dicarbonsäuren, die neben Terephthalsäure verwendet werden können, besitzen 6 bis 36 Kohlenstoffatome und werden in einem Anteil von höchstens 70 Mol-%, insbesondere in einem Anteil von höchstens 50 Mol-%, bezogen auf die Gesamtmenge der Dicarbonsäuren, eingesetzt.

Zudem ist bevorzugt, dass die genannten aromatischen Dicarbonsäuren des teilaromatischen Polyamids der Komponente (A1) ausgewählt sind aus der Gruppe: Terephthalsäure, Isophthalsäure, sowie Mischungen davon.

Gemäß einer weiteren bevorzugten Ausführungsform sind die genannten z.B. aliphatischen Dicarbonsäuren des teilaromatischen Polyamids der Komponente (A1), die neben Terephthalsäure eingesetzt werden können, ausgewählt aus der Gruppe Adipinsäure, Korksäure, Azelainsäure, Sebazinsäure, Undecandisäure, Dodecandisäure, Brassylsäure, Tetradecandisäure, Pentadecandisäure, Hexadecandisäure, Octadecandisäure und Dimerfettsäure (C36). Unter den Dicarbonsäuren werden Adipinsäure, Sebazinsäure, Dodecandisäure, Isophthalsäure oder eine Mischung derartiger Dicarbonsäuren, besonders Adipinsäure und Isophthalsäure und besonders Adipinsäure alleine bevorzugt.

Gemäß einer weiteren bevorzugten Ausführungsform sind die genannten aliphatischen Diamine des teilaromatischen Polyamids der Komponente (A1) ausgewählt aus der Gruppe 1,4-Butandiamin, 1,5-Pentandiamin, 1,6-Hexandiamin, 1,7-Heptandiamin, 1,8-Octandiamin, 1,9-Nonandiamin, Methyl-1,8-Octandiamin, 1,10-Decandiamin, 1,11-Undecandiamin, 1,12-Dodecandiamin, oder einer Mischung derartiger Diamine, wobei 1,6-Hexandiamin, 1,10-Decandiamin, 1,12-Dodecandiamin, oder eine Mischung derartiger Diamine bevorzugt ist, wobei 1,6-Hexandiamin und 1,10-Decandiamin besonders bevorzugt sind. Neben den aliphatischen Diaminen können in einer Konzentration von 0 bis 20 Mol-%, bezogen auf die Gesamtmenge an Diaminen, cycloaliphatische und/oder araliphatische Diamine ersetzt werden.

Besonders bevorzugt werden die hochschmelzenden Polyamide aus folgenden Komponenten gebildet:
a) (A1a) Dicarbonsäuren:
   50 bis 100 Mol-% aromatische Terephthalsäure und/oder Naphthalindicarbonsäure, bezogen auf den Gesamtgehalt an anwesenden Dicarbonsäuren,
   0 bis 50 Mol-°/ einer aliphatischen Dicarbonsäure, bevorzugt mit 6 bis 12 Kohlenstoffatomen, und/oder einer cycloaliphatischen Dicarbonsäure mit bevorzugt 8 bis 20 Kohlenstoffatomen, und/oder Isophthalsäure;
b) (A1b) Diamine:
   80 bis 100 Mol-% mindestens eines aliphatischen Diamins mit 4 bis 18 Kohlenstoffatomen, vorzugsweise mit 6 bis 12 Kohlenstoffatomen, bezogen auf den Gesamtgehalt an anwesenden Diaminen,
   0 bis 20 Mol-% cycloaliphatische Diamine, vorzugsweise mit 6 bis 20 Kohlenstoffatomen, und/oder araliphatische Diamine, wie z.B. PACM, MACM, IPDA, MXDA und PXDA,
      wobei in den hochschmelzenden Polyamiden der prozentuale Molgehalt an Dicarbonsäuren 100 % und der prozentuale Molgehalt an Diaminen 100 % ausmacht, und gegebenenfalls aus:
c) (A1c) Aminocarbonsäuren und/oder Lactamen, enthaltend Lactame mit bevorzugt 6 bis 12 Kohlenstoffatomen, und/oder Aminocarbonsäuren mit bevorzugt 6 bis 12 Kohlenstoffatomen.

Während die Komponenten (A1a) und (A1b) weitgehend äquimolar eingesetzt werden, beträgt die Konzentration von (A1c) höchstens 20 Gew.-%, bevorzugt höchstens 15 Gew.-%, insbesondere höchstens 12 Gew.-%, jeweils bezogen auf die Summe von (A1a) bis (A1c).

Zusätzlich zu den weitgehend äquimolar eingesetzten Komponenten (A1a) und (A1b) können Dicarbonsäuren (A1a) oder Diamine (A1b) zur Regelung der Molmasse oder zum Ausgleich von Monomerverlusten bei der Polyamidherstellung eingesetzt werden, sodass in ihrer Gesamtheit die Konzentration einer Komponente (A1a) oder (A1b) überwiegen kann.

Geeignete cycloaliphatische Dicarbonsäuren sind die cis- und/oder trans-Cyclohexan-1,4-dicarbonsäure und/oder cis- und/oder trans-Cyclohexan-1,3-dicarbonsäure (CHDA).

Die oben genannten, obligatorisch eingesetzten aliphatischen Diamine können in untergeordneter Menge von nicht mehr als 20 Mol-%, von vorzugsweise nicht mehr als 15 Mol-% und insbesondere nicht mehr als 10 Mol-%, bezogen auf die Gesamtmenge der Diamine, durch andere Diamine ersetzt werden. Als cycloaliphatische Diamine können beispielsweise Cyclohexandiamin, 1,3-Bis-(aminomethyl)-cyclohexan (BAC), Isophorondiamin, Norbornandimethylamin, 4,4'-Diaminodicyclohexylmethan (PACM), 2,2-(4,4'-Diaminodicyclohexyl)propan (PACP) und 3,3'-Dimethyl-4,4'-diamino-dicyclohexylmethan (MACM) verwendet werden. Als araliphatische Diamine seien m-Xylylendiamin (MXDA) und p-Xylylendiamin (PXDA) erwähnt.

Zusätzlich zu den beschriebenen Dicarbonsäuren und Diaminen können noch Lactame und/oder Aminocarbonsäuren als polyamidbildende Komponenten (Komponente (A1c)) eingesetzt werden. Geeignete Verbindungen sind beispielsweise Caprolactam (CL), α,ω-Aminocapronsäure, α,ω-Aminononansäure, α,ω-Aminoundecansäure (AUA), Laurinlactam (LL) und α,ω-Aminododecansäure (ADA). Die Konzentration der zusammen mit den Komponenten (A1a) und (A1b) eingesetzten Aminocarbonsäuren und/oder Lactame beträgt höchstens 20 Gew.-%, bevorzugt höchstens 15 Gew.-% und besonders bevorzugt höchstens 12 Gew.-%, bezogen auf die Summe der Komponenten (A1a) bis (A1c). Speziell bevorzugt sind Lactame bzw. α,ω-Aminosäuren mit 4, 6, 7, 8, 11 oder 12 C-Atomen. Dies sind die Lactame Pyrrolidin-2-on (4 C-Atome), ε-Caprolactam (6 C-Atome), Önantholactam (7 C-Atome), Capryllactam (8 C-Atome), Laurinlactam (12 C-Atome) bzw. die α,ω-Aminosäuren 1,4-Aminobutansäure, 1,6-Aminohexansäure, 1,7-Aminoheptansäure, 1,8-Aminooctansäure, 1,11-Aminoundecansäure und 1,12-Aminododecansäure. In einer besonders bevorzugten Ausführungsform ist Komponente A1 frei von Caprolactam bzw. Aminocapronsäure.

Zur Regelung der Molmasse, der relativen Viskosität bzw. der Fliessfähigkeit oder des MVR können dem Ansatz und/oder dem Vorkondensat (vor der Nachkondensation) Regler in Form von Monocarbonsäuren oder Monoaminen zugesetzt werden. Als Regler geeignete, aliphatische, cycloaliphatische oder aromatische Monocarbonsäuren oder Monoamine sind Essigsäure, Propionsäure, Buttersäure, Valeriansäure, Capronsäure, Laurinsäure, Stearinsäure, 2-Ethylhexansäure, Cyclohexansäure, Benzoesäure, 3-(3,5-di-*tert*-butyl-4-hydroxyphenyl)propansäure, 3,5-di-*tert*-butyl-4-hydroxybenzoesäure, 3-(3-*tert*-butyl-4-hydroxy-5-methylphenyl)propansäure, 2-(3,5-di-*tert*-butyl-4-hydroxybenzylthio)essigsäure, 3,3-bis(3-*tert*-butyl-4-hydroxy-phenyl)butansäure, Butylamin, Pentylamin, Hexylamin, 2-Ethylhexylamin, n-Octylamin, n-Dodecylamin, n-Tetradecylamin, n-Hexadecylamin, Stearylamin, Cyclohexylamin, 3-(Cyclohexylamino)-propylamin, Methylcyclohexylamin, Dimethylcyclohexylamin, Benzylamin, 2-Phenylethylamin, 2,2,6,6-tetramethylpiperidin-4-amin, 1,2,2,6,6-pentamethylpiperidin-4-amin, 4-amino-2,6-di-*tert*-butylphenol u.a. Die Regler können einzeln oder in Kombination benutzt werden. Es können auch andere monofunktionelle Verbindungen als Regler eingesetzt werden, die mit einer Amino- oder Säuregruppe reagieren können, wie Anhydride, Isocyanate, Säurehalogenide oder Ester. Die übliche Einsatzmenge der Regler liegt zwischen 10 und 200 mmol pro kg Polymer.

Die teilaromatischen Copolyamide (A1) können mit an sich bekannten Verfahren hergestellt werden. Geeignete Verfahren sind an verschiedener Stelle beschrieben worden, und in der Folge sollen einige der möglichen in der Patentliteratur diskutierten Verfahren angegeben werden, wobei hinsichtlich des Verfahrens zur Herstellung des Copolyamids der Komponente (A) der vorliegenden Erfindung auf folgende Druckschriften hingewiesen wird: DE-A-195 13 940, EP-A-0 976 774, EP-A-0 129 195, EP-A-0 129 196, EP-A-0 299 444, US 4,831,106, US 4,607,073, DE-A-14 95 393 und US 3,454,536.

Konkrete Vertreter für die erfindungsgemäßen Polyamide (A1) sind: PA 4T/4I, PA 4T/6I, PA 5T/5I, PA 6T/6I, PA 6T/6I/6, PA 6T/66, 6T/610, 6T/612, PA 6T/10T, PA 6T/10I, PA 9T, PA 10T, PA 12T, PA 10T/10I, PA10T/106, PA10T/12, PA1OT/11, PA 6T/9T, PA 6T/12T, PA 6T/10T/6I, PA 6T/6I/6, PA 6T/6I/12 sowie Mischungen davon, insbesondere vorzugsweise ist das teilaromatische Polyamid der Komponente (A) ausgewählt aus der Gruppe: PA 6T/6I, PA 6T/66, PA 6T/10T, PA 6T/10T/6I, sowie Mischungen davon. Bevorzugt werden Polyamide (A1), welche 6T-Einheiten, insbesondere wenigstens 10 Gew.-% an 6T-Einheiten enthalten.

Erfindungsgemäß sind daher als hochschmelzende Polyamide (A1) insbesondere folgende teilaromatische Copolyamide bevorzugt:
• teilkristallines Polyamid 6T/6I mit 50 bis 80 Mol-% Hexamethylentrephthalamid-Einheiten und 20 bis 50 Mol-% Hexamethylenisophthalamid-Einheiten;
• teilkristallines Polyamid 6T/6I mit 55 bis 75 Mol-% Hexamethylenterephthalamid-Einheiten und 25 bis 45 Mol-% Hexamethylenisophthalamid-Einheiten;
• teilkristallines Polyamid 6T/6I mit 62 bis 73 Mol-% Hexamethylenterephthalamid-Einheiten und 25 bis 38 Mol-% Hexamethylenisophthalamid-Einheiten;
• teilkristallines Polyamid 6T/6I mit 70 Mol-% Hexamethylenterephthalamid-Einheiten und 30 Mol-% Hexamethylenisophthalamid-Einheiten;
• teilkristallines Polyamid 6T/66 mit 30 bis 80 Mol-% Hexamethylenterephthalamid-Einheiten und 20 bis 70 Mol-% Hexamethylenadipamid-Einheiten
• teilkristallines Polyamid 6T/66 mit 50 bis 70 Mol-% Hexamethylenterephthalamid-Einheiten und 30 bis 50 Mol-% Hexamethylenadipamid-Einheiten;
• teilkristallines Polyamid 6T/66 mit 50 bis 60 Mol-% Hexamethylenterephthalamid-Einheiten und 40 bis 50 Mol-% Hexamethylenadipamid-Einheiten;
• teilkristallines Polyamid 6T/66 mit 55 bis 60 Mol-% Hexamethylenterephthalanlid-Einheiten und 40 bis 45 Mol-% Hexamethylenadipamid-Einheiten;
• teilkristallines Polyamid, hergestellt aus mindestens 50 Mol-% Terephthalsäure und höchstens 50 Mol-% Isophthalsäure sowie einer Mischung aus mindestens zwei Diaminen, ausgewählt aus der Gruppe Hexamethylendiamin, Nonandiamin, Methyloctandiamin und Decandiamin;
• teilkristallines Polyamid, hergestellt aus mindestens 70 Mol-% Terephthalsäure und höchstens 30 Mol-% Isophthalsäure sowie einer Mischung aus Hexamethylendiamin und Dodecandiamin;
• teilkristallines Polyamid, hergestellt aus mindestens 50 Mol-% Terephthalsäure und höchstens 50 Mol-% Dodekandisäure sowie einer Mischung aus mindestens zwei Diaminen, ausgewählt aus der Gruppe Hexamethylendiamin, Nonandiamin, Methyloctandiamin und Decandiamin;
• teilkristallines Polyamid 6T/10T mit 10 bis 60 Mol-%, bevorzugt 10 bis 40 Mol-% Hexamethylen-terephthalamid-(6T)- und 40 bis 90 Mol-%, bevorzugt 60 bis 90 Mol-% Decamethylenterephthalamid-(10T)-Einheiten;
• teilkristallines Polyamid 6T/10T/6I mit 50 bis 90 Mol-%, vorzugsweise 50 bis 70 Mol-% Hexamethylenterephthalamid-(6T)-, und 5 bis 45 Mol-%, vorzugsweise 10 bis 30 Mol-% Hexamethylenisophthaiamid-(61)-Einheiten und 5 bis 45 Mol-%, vorzugsweise 20 bis 40 Mol-% Decamethylenterephthalamid-(10T)-Einheiten;
• teilkristallines Polyamid 6T/6I/6 mit 60 bis 85 Mol-% Hexamethylenterephthalamid-(6T)- und 15 bis 40 Mol-% Hexamethylenisophthalamid-(6I)-Einheiten, das zusätzlich 5 bis 15 Gew.-% Caprolactam enthält.

Das teilaromatische, teilkristalline Polyamid (A1) hat eine Lösungsviskosität ηᵣₑₗ, gemessen nach DIN EN ISO 307 an Lösungen von 0,5 g Polymer in 100 ml m-Kresol bei einer Temperatur von 20°C, von höchstens 2,6, bevorzugt von höchstens 2,3, insbesondere von höchstens 2,0. Bevorzugt werden Polyamide (A1) mit einer Lösungsviskosität ηᵣₑₗ im Bereich von 1,45 bis 2,3, insbesondere im Bereich von 1,5 bis 2,0 oder 1,5 bis 1,8.

Die erfindungsgemäßen Polyamide (A1) können auf üblichen Polykondensationsanlagen über die Prozessfolge Vorkondensat und Nachkondensation hergestellt werden. Für die Polykondensation werden zur Regelung der Viskosität bevorzugt die beschriebenen Kettenregler eingesetzt. Zusätzlich kann die Viskosität durch den Einsatz eines Diamin- oder Disäureüberschusses eingestellt werden.

Bei der Komponente (A2) handelt es sich um Copolyamide 6.T/6 mit einem Gehalt an Caprolactam von wenigstens 30 Gew.-%, bevorzugt von mindestens 50 Gew.-% und insbesondere bevorzugt von mindesten 60 Gew.-%.

Das Copolyamid (A2) hat eine Lösungsviskosität ηᵣₑₗ, gemessen nach DIN EN ISO 307 an Lösungen von 0,5 g Polymer gelöst in 100 ml m-Kresol bei einer Temperatur von 20°C, im Bereich von 1,5 bis 3,0, bevorzugt im Bereich von 1,6 bis 2,5, insbesondere im Bereich von 1,8 bis 2,2.

Gemäß einer weiteren bevorzugten Ausführungsform der vorgeschlagenen der Komponente (B) um Fasern, insbesondere um Glas- und/oder Kohlenstofffasern, wobei bevorzugt Kurzfasern, bevorzugt mit einer Länge im Bereich von 0,2 bis 50 mm und einem Durchmesser von 5 bis 40 µm und/oder Endlosfasern (Rovings) eingesetzt werden und wobei insbesondere Fasern mit kreisförmiger und/oder nicht-kreisförmiger Querschnittsfläche eingesetzt werden, wobei im letzteren Fall das Abmessungsverhältnis von der Hauptquerschnittsachse zur Nebenquerschnittsachse insbesondere > 2 ist, bevorzugt im Bereich von 2 bis 8 und besonders bevorzugt im Bereich von 3 bis 5 liegt.

Dabei werden Glasfasern mit nicht-kreisförmiger Querschnittsfläche und einem Abmessungsverhältnis von der Hauptquerschnittsachse zur Nebenquerschnittsachse von mehr als 2, bevorzugt von 2 bis 8, insbesondere von 3 bis 5, bevorzugt eingesetzt. Diese sogenannten flachen Glasfasern weisen eine ovale, elliptische, mit Einschnürung(en) versehene elliptische (sog. "Kokon"- oder "cocoon"-Faser), rechteckige oder nahezu rechteckige Queschnittsfläche auf.

Die erfindungsgemäßen flachen Glasfasern mit nicht-kreisförmiger Querschnittsfläche werden bevorzugt als Kurzglasfaser (Schnittglas mit einer Länge von 0,2 bis 20 mm, bevorzugt von 2 bis 12 mm) eingesetzt.

Ein weiteres bevorzugtes Merkmal der eingesetzten flachen Glasfasern besteht darin, dass die Länge der Hauptquerschnittsachse bevorzugt im Bereich von 6 bis 40 µm, insbesondere im Bereich von 15 bis 30 µm, und die Länge der Nebenquerschnittsachse im Bereich von 3 bis 20 µm, insbesondere im Bereich von 4 bis 10 µm liegt.

Zur Verstärkung der erfindungsgemäßen Formmassen können auch Mischungen von Glasfasern mit kreisförmigem und nicht-kreisförmigem Querschnitt verwendet werden, wobei der Anteil an flachen Glasfasern wie oben definiert bevorzugt überwiegt, d.h. mehr als 50 Gew.-% der Gesamtmasse der Fasern ausmacht.

Werden verstärkte Formmassen mit guter Fließfähigkeit und guter Oberflächenqualität angestrebt, insbesondere in Kombination mit Flammschutzmitteln, dann bestehen die Verstärkungsfasern bevorzugt überwiegend (d.h. z.B. mehr als 80 Gew.-% oder sogar mehr als 90 Gew.-%) aus flachen Glasfasern oder sogar ausschließlich aus flachen Glasfasern.

Die erfindungsgemäß als Roving (Füllstoffkomponente (B)) eingesetzten Glasfasern weisen einen Durchmesser von 10 bis 20 µm, bevorzugt von 12 bis 18 µm auf, wobei der Querschnitt der Glasfasern rund, oval, elliptisch, nahezu rechteckig oder rechteckig sein kann. Besonders bevorzugt werden sogenannte flache Glasfasern mit einem Verhältnis der Querschnittsachsen von 2 bis 5. Insbesondere werden erfindungsgemäß E-Glasfasern verwendet. Es können aber auch alle anderen Glasfasersorten, wie z.B. A-, C-, D-, M, S-, R-Glasfasern oder beliebige Mischungen davon oder Mischungen mit E-Glasfasern eingesetzt werden.

Bei langfaserverstärkten Formmassen ergeben sich höhere Zähigkeiten und somit noch metallähnlichere Eigenschaften, wenn anstatt der üblichen Endlosglasfaser mit einem Durchmesser von 15 bis 19 µm, solche mit einem Durchmesser von 10 bis 14 µm, insbesondere solche mit einem Durchmesser von 10 bis 12 µm verwendet werden.

Die erfindungsgemäßen Polyamidformmassen können durch die bekannten Verfahren zur Herstellung von langfaserverstärktem Stäbchengranulat hergestellt werden, insbesondere durch Pultrusionsverfahren, bei denen der endlose Faserstrang (Roving) mit der Polymerschmelze vollständig durchtränkt und anschließend abgekühlt und geschnitten wird.

Das auf diese Art und Weise erhaltene langfaserverstärkte Stäbchengranulat, das bevorzugt eine Granulatlänge von 3 bis 25 mm, insbesondere von 4 bis 12 mm aufweist, kann mit den üblichen Verarbeitungsverfahren, wie z. B. Spritzgießen oder Pressen, zu Formteilen weiterverarbeitet werden.

Die beim Pultrusionsverfahren eingesetzten Endlos-Kohlefasern weisen einen Durchmesser von 5 bis 10 µm, bevorzugt von 6 bis 8 µm auf. Zur Verbesserung der Matrixanbindung und des Faserhandlings können die Fasern mit chemisch unterschiedlichen Schichten, wie sie für Glas- und Kohlefasern im Stand der Technik bekannt sind, beschichtet sein.

Die Glasfaser selbst, unabhängig von der Form der Querschnittsfläche und Länge der Faser, kann dabei ausgewählt sein aus der Gruppe aus E-Glasfasern, A-Glasfasern, C-Glasfasern, D-Glasfasern, M-Glasfasern, S-Glasfasern und/oder R-Glasfasern, wobei E-Glasfasern bevorzugt sind.

Bei den Füll- und Verstärkungsmitteln der Komponente (B) kann es sich auch um teilchenförmige Füllstoffe handeln, oder eine Mischung aus Fasern und teilchenförmigen Füllstoffen. Dabei können als teilchenförmige Füllstoffe vorzugsweise mineralische Füllstoffe auf Basis von natürlichen und/oder synthetischen Schichtsilikaten, Talk, Glimmer, Silikat, Quarz, Titandioxid, Wollastonit, Kaolin, amorphen Kieselsäuren, Magnesiumcarbonat, Magnesiumhydroxid, Kreide, Kalk, Feldspat, Bariumsulfat, Voll- oder Hohl-Glaskugeln oder gemahlenem Glas, dauerhaft magnetische bzw. magnetisierbare Metallverbindungen und/oder Legierungen respektive Mischungen eingesetzt werden. Die Füllstoffe können auch oberflächenbehandelt sein.

Als Schichtsilikate können in den erfindungsgemäßen Formmassen z.B. Kaoline, Serpentine, Talkum, Glimmer, Vermiculite, Illite, Smectite, Montmorillonit, Hectorit, Doppelhydroxyde oder Gemische davon eingesetzt werden. Die Schichtsilikate können oberflächenbehandelt, aber auch unbehandelt sein.

Als Komponente (C) enthalten die erfindungsgemäßen thermoplastischen Formmassen 0,01 bis 3 Gew.-%, bevorzugt 0,02 bis 2 Gew.-%, besonders bevorzugt 0,1 bis 1,5 Gew.-% mindestens eines Wärmestabilisators.

In einer bevorzugten Ausführungsform sind die Wärmestabilisatoren ausgewählt aus der Gruppe bestehend aus
Verbindungen des ein- oder zweiwertigen Kupfers, z.B. Salze des ein- oder zweiwertigen Kupfers mit anorganischen oder organischen Säuren oder ein- oder zweiwertigen Phenolen, die Oxide des ein- oder zweiwertigen Kupfers, oder die Komplexverbindungen von Kupfersalzen mit Ammoniak, Aminen, Amiden, Lactamen, Cyaniden oder Phosphinen, bevorzugt Cu(I)- oder Cu(II)-Salze der Halogenwasserstoffsäuren, der Cyanwasserstoffsäuren oder die Kupfersalze der aliphatischen Carbonsäuren. Besonders bevorzugt sind die einwertigen Kupferverbindungen CuCl, CuBr, Cul, CuCN und Cu₂O, sowie die zweiwertigen Kupferverbindungen CuCl₂, CuSO₄, CuO, Kupfer(II)acetat oder Kupfer(II)stearat. Sofern eine Kupferverbindung verwendet wird, beträgt vorzugsweise die Menge an Kupfer 0,003 bis 0,5, insbesondere 0,005 bis 0,3 und besonders bevorzugt 0,01 bis 0,2 Gew.-%, bezogen auf die Summe der Komponenten (A) bis (D). Die Kupferverbindungen sind handelsüblich bzw. ihre Herstellung ist dem Fachmann bekannt. Die Kupferverbindung kann als solche oder in Form von Konzentraten eingesetzt werden. Unter Konzentrat ist dabei ein Polymer, vorzugsweise gleicher chemischer Natur wie Komponente (A1) oder (A2), zu verstehen, welches das Kupfersalz in hoher Konzentration enthält. Der Einsatz von Konzentraten ist ein übliches Verfahren und wird besonders häufig dann angewandt, wenn sehr geringe Mengen eines Einsatzstoffes zu dosieren sind. Vorteilhafterweise werden die Kupferverbindungen in Kombination mit weiteren Metallhalogeniden, insbesondere Alkalihalogeniden, wie Nal, KI, NaBr, KBr, eingesetzt, wobei das molare Verhältnis von Metallhalogenid zu Kupferhalogenid 0.5 bis 20, bevorzugt 1 bis 10 und besonders bevorzugt 3 bis 7 beträgt.
• Stabilisatoren auf Basis sekundärer aromatischer Amine, wobei diese Stabilisatoren vorzugsweise in einer Menge von 0,2 bis 2, bevorzugt von 0,2 bis 1,5 Gew.-% vorliegen,
• Stabilisatoren auf Basis sterisch gehinderter Phenole, wobei diese Stabilisatoren vorzugsweise in einer Menge von 0,1 bis 1,5, bevorzugt von 0,2 bis 1 Gew.-% vorliegen, und
• Phosphiten und Phosphoniten, sowie
• Mischungen der vorstehend genannten Stabilisatoren.

Besonders bevorzugte Beispiele für erfindungsgemäß einsetzbare Stabilisatoren auf Basis sekundärer aromatischer Amine sind Addukte aus Phenylendiamin mit Aceton (Naugard A), Addukte aus Phenylendiamin mit Linolen, Naugard 445, N,N'-Dinaphthyl-p-phenylendiamin, N-Phenyl-N'-cyclohexyl-p-phenylendiamin oder Mischungen von zwei oder mehreren davon.

Bevorzugte Beispiele für erfindungsgemäß einsetzbare Stabilisatoren auf Basis sterisch gehinderter Phenole sind N,N'-Hexamethylen-bis-3-(3,5-di-tert-butyl-4-hydroxyphenyl)-propionamid, Bis-(3,3-bis-(4'-hydroxy-3'-tert-butylphenyl)-butansäure)-glykolester, 2,1'-Thioethylbis-[3-[3,5-di-tert-butyl-4-hydroxyphenyl)-propionat, 4-4'-Butyliden-bis-(3-methyl-6-tert-butylphenol), Triethylenglykol-3-(3-tert-butyl-4-hydroxy-5-methylphenyl)-propionat oder Mischungen von zweien oder mehreren dieser Stabilisatoren.

Bevorzugte Phosphite und Phosphonite sind Triphenylphosphit, Diphenylalkylphosphit, Phenyldialkylphosphit, Tris(nonylphenyl)phosphit, Trilaurylphosphit, Trioctadecylphosphit, Distearylphentaerythritoldiphosphit, Tris(2,4-di-tert-butylphenyl)phosphit, Diisodecylpentaerythritoldiphosphit, Bis(2,4-di-tert-butylphenyl)pentaerythritoldiphosphit, Bis(2,6-di-tert-butyl-4-methylphenyl)-pentaerythritoldiphosphit, Diisodecyloxypentaerythritoldiphosphit, Bis(2,4-di-tert-butyl-6-methylphenyl)pentaerythritoldiphosphit, Bis(2,4,6-tris-(tert-butylphenyl))pentaerythritol-diphosphit, Tristearylsorbitoltriphosphit, Tetrakis(2,4-di-tert-butylphenyl)-4,4'-biphenylendiphosphonit, 6-Isooctyloxy-2,4,8,10-tetra-tert-butyl-12H-dibenz-[d,g]-1,3,2-dioxaphosphocin, 6-Fluoro-2,4,8,10-tetra-tert-butyl-12-methyl-dibenz[d,g]-1,3,2-dioxaphosphocin, Bis(2,4-di-tert-butyl-6-methylphenyl)methylphosphit und Bis(2,4-di-tert-butyl-6-methylphenyl)ethylphosphit. Insbesondere werden bevorzugt Tris[2-tert-butyl-4-thio(2'-methyl-4'-hydroxy-5'-tert-butyl)-phenyl-5-methyl]phenyl-phosphit und Tris(2,4-di-tert-butylphenyl)phosphit (Hostanox^{®} PAR24: Handelsprodukt der Firma Clariant, Basel).

Eine bevorzugte Ausführungsform des Wärmestabilisators besteht in der Kombination von organischen Hitzestabilisatoren (insbesondere Hostanox PAR 24 und Irganox 1010), einem Bisphenol A basiertem Epoxid (insbesondere Epikote 1001) und einer Kupferstabilisierung auf Basis von Cul und Kl. Eine kommerziell erhältliche Stabilisatormischung, bestehend aus organischen Stabilisatoren und Epoxiden ist beispielsweise Irgatec NC66 von BASF SE. Eine weitere kommerziel verfügbare Stabilsatormischung ist Recycloblend^{®} 660 von BASF SE. Insbesondere bevorzugt wird eine Wärmestabilisierung ausschließlich auf Basis von Cul und Kl. Neben dem Zusatz von Kupfer oder Kupferverbindungen wird die Verwendung weiterer Übergangsmetallverbindungen, insbesondere Metallsalze oder Metalloxide der Gruppe VB, VIB, VIIB oder VIIIB des Periodensystems ausgeschlossen.

Gegebenenfalls können jedoch metallische Zusätze, wie beispielsweise Zusätze aus elementaren Metallen der Gruppen VB, VIB, VIIB und/oder VIIIB, wie z.B. Eisen- oder Stahlpulver etc., in der Polyamid-Formmasse vorhanden sein oder dieser zugesetzt sein.

Die erfindungsgemäßen Formmassen können weitere Zusatzstoffe (D), wie z. B. aus der Gruppe der Lichtschutzmittel, UV-Stabilisatoren, UV-Absorber oder UV-Blocker, Gleitmittel, Farbstoffe, Nukleierungsmittel, metallische Pigmente, Antistatika, Leitfähigkeitsadditive, Entformungsmittel, optischen Aufheller, oder Gemische der genannten Zusatzstoffe enthalten. Als Antistatika können in den erfindungsgemäßen Formmassen z.B. Ruß und/oder Kohlenstoffnanoröhrchen eingesetzt werden. Die Verwendung von Ruß kann aber auch zur Verbesserung der Schwarzfärbung der Formmasse dienen. Die Formmasse kann jedoch auch frei von metallischen Pigmenten sein.

Vorzugsweise weisen die erfindungsgemäßen Formmassen nach 1000 Stunden Wärmealterung bei 220°C eine Bruchfestigkeit von mehr als 50 %, bevorzugt mehr als 54 % und insbesondere bevorzugt von mehr als 56 % bezogen auf den Ausgangswert vor der Wärmealterung auf.

Vorzugsweise weisen die erfindungsgemäßen Formmassen nach 1000 Stunden Wärmealterung bei 220°C eine Bruchdehnung von mehr als 47 %, bevorzugt mehr als 48 % und insbesondere bevorzugt von mehr als 50 % bezogen auf den Ausgangswert vor der Wärmealterung auf.

Desweiteren betrifft die vorliegende Erfindung zudem Formkörper, die unter Verwendung von derartigen Polyamid-Formmassen hergestellt werden.

Für den Automobilbereich seien beispielhaft genannt: Zylinderkopfhauben, Motorabdeckungen, Gehäuse für Ladeluftkühler, Ladeluftkühlerklappen, Ansaugrohre, insbesondere Ansaugkrümmer, Konnektoren, Zahnräder, Lüfterräder, Kühlwasserkästen, Gehäuse oder Gehäuseteile für Wärmetauscher, Kühlmittelkühler, Ladeluftkühler, Thermostat, Wasserpumpe, Heizkörper, Befestigungsteile. Im Bereich Elektro/Elektronik sind solche Verwendungen beispielsweise Teile von Leiterplatten, Gehäusen, Folien, Leitungen, Schaltern, Verteilern, Relais, Widerstände, Kondensatoren, Spulen, Lampen, Dioden, LEDs, Transistoren, Konnektoren, Regler, Speicher und Sensoren. Weitere Ausführungsformen sind in den abhängigen Ansprüchen angegeben.

Die Erfindung soll nachfolgend unter Verwendung von spezifischen Ausführungsbeispielen beschrieben und mit den Systemen nach dem Stand der Technik verglichen werden. Die in der Folge angegebenen Ausführungsbeispiele und die Figur dienen zur Stützung der Erfindung und zum Nachweis der Unterschiede zum Stand der Technik, sie sollen aber nicht zur Einschränkung des allgemeinen Gegenstandes der Erfindung, wie er in den Patentansprüchen definiert ist, hinzugezogen werden.

### Herstellung der Formmassen und Compounds

Die Formmassen für die erfindungsgemäßen Beispiele B1 bis B4 sowie für die Vergleichsbeispiele VB1 bis VB5 wurden auf einem Zweiwellenextruder der Fa. Werner und Pfleiderer Typ ZSK25 hergestellt. Es wurden die in Tabelle 2 angegebenen Mengenanteile der Ausgangsstoffe in Gewichtsprozent (Gew.-%) bezogen auf 100 Gew.-% der gesamten Formmasse im Zweiwellenextruder compoundiert. Die Polyamid-Granulate wurden zusammen mit den Additiven in die Einzugszone dosiert, während die Glasfaser über Sidefeeder 3 Gehäuseeinheiten vor der Düse in die Polymerschmelze dosiert wurde. Die Gehäusetemperatur wurde als aufsteigendes Profil bis 330°C eingestellt. Bei 150 bis 200 upm wurden 10 kg Durchsatz erreicht. Nach Abkühlen der Stränge im Wasserbad, Granulierung und Trocknung bei 120°C für 24 Stunden erfolgte das Verspritzen der Compounds zu ISO-Prüfkörpern. Es wurde auf einer Spritzgussmaschine Arburg Allrounder 320-210-750 bei Zylindertemperaturen von 325°C bis 340°C der Zonen 1 bis 4 und einer Werkzeugtemperatur von 130°C verspritzt.

Die in Tabelle 1 aufgeführten Materialien wurden in den Beispielen und Vergleichsbeispielen eingesetzt.

**Tabelle 1: Eingesetzte Materialien.**

| Stoff | Handelsname | Lieferant | rel. Viskosität^{a} | H₂O-Gehalt [Gew.-%] |
|---|---|---|---|---|
| PA 6T/6I/6 (70:18:12 mol-%) | - | EMS-CHEMIE AG (CH) | 1,72^{a} | 0,01 |
| PA 6T/66 (55:45 mol-%) | - | EMS-CHEMIE AG (CH) | 1,60^{a} | 0,06 |
| PA 6T/6 A (25:75 mol-%) | - | EMS-CHEMIE AG (CH) | 1,80^{a} | 0,03 |
| PA 6T/6 B (50:50 ml-%) | - | EMS-CHEMIE AG (CH) | 1,90^{a} | 0,03 |
| PA 6T/6 C (60:40 mol-%) | - | EMS-CHEMIE AG (CH) | 1,60^{a} | 0,04 |
| PA 6 A | Grilon A28 | EMS-CHEMIE AG (CH) | 2,20^{b} | 0,02 |
| PA 6 B | Grilon F47 | EMS-CHEMIE AG (CH) | 3,10^{b} | 0,02 |
| Ca-Stearat | Ligastar CA 80 | Greven (DE) | - | - |
| Kl/Ca-Stearat (Verhältnis 98:2) | - | AJAY Europe S.A.R.L. (FR)^{c} | - | - |
| Kupferiodid | - | William Blythe (UK) | - | - |
| Stabilisatormischung | Recycloblend^{®} 660 | BASF SE | - | - |
| Kaolin | - | Imerys Performance & Filtration Minerals (UK) | - | - |
| Stabilsator 1 | Doverphos S-9228 | Dover Chemical Corp. (US) | - | - |
| Schwarzmasterbatch | MB PA66 W9296^{d} | - | - | - |
| Glasfaser 1 | Vetrotrex 995 EC10-4.5 | OCV (FR) | - | - |
| Glasfaser 2 | Chopvantage HP 3660 | PPG (NL) | - | - |

| | | | | |
|---|---|---|---|---|
| *a) Bestimmt nach ISO 307 (0,5 g Polyamid in 100 ml m-Kresol), Berechnung der relativen Viskosität (RV) nach RV = t*/*t₀ in Anlehnung an Abschnitt 11 der Norm; b) Bestimmt nach ISO 307 (0,5 g Polyamid in 100 ml Ameisensäure), Berechnung der relativen Viskosität (RV) nach RV = t*/*t₀ in Anlehnung an Abschnitt 11 der Norm c) Lieferant von KI, Abmischung mit Ca-Stearat erfolgt bei EMS; d) Masterbatch aus 75 Gew.-% PA66 mit einer RV von 2,8 (bestimmt nach ISO 307 mit 0,5 g Polyamid in 100 ml H₂SO₄) und 25 % Russ, hergestellt bei der EMS-CHEMIE AG, e) Smp. 310°C, Tg: 94°C.* | | | | |

**Tabelle 2: Zusammensetzungen.**

| **Zusammensetzung** | B1 | VB1 | VB2 | B2 | B3 | B4 | VB3 | VB4 |
|---|---|---|---|---|---|---|---|---|
| PA 6T/6I/6 | 61,8 | 46,0 | 67,775 | - | - | - | - | - |
| PA 6T/66 | - | - | - | 57,4 | 57,4 | 40,4 | 57,4 | 59,86 |
| PA 6T/6 A | 7,2 | 23,0 | - | 12,0 | - | - | - | - |
| PA 6T/6 B | - | - | - | - | - | - | - | - |
| PA 6T/6 C | - | - | - | - | 12,0 | 29,0 | - | - |
| PA6A | - | - | - | - | - | - | - | 9,0 |
| PA6B | - | - | - | - | - | - | 12,0 | - |
| Lactamanteil in Komp. A und B bezogen auf die Summe der Komponenten A und B [mol-%] | 19 | 33 | 12 | 13 | 7 | 17 | 17 | 13 |
| KI/Ca-Stearat (Verhältnis 98:2) | 0,3 | 0,3 | 0,21 | 0,3 | 0,3 | 0,3 | 0,3 | 0,3 |
| Kupferiodid | 0,035 | 0,035 | 0,035 | 0,035 | 0,035 | 0,035 | 0,035 | 0,04 |
| Stabilisatormischung | 0,4 | 0,4 | 0,5 | - | - | - | - | - |
| Stabilisator 1 | - | - | - | - | - | - | - | 0,5 |
| Kaolin | 0,265 | 0,265 | 0,28 | 0,265 | 0,265 | 0,265 | 0,265 | 0,3 |
| Schwarzmasterbatch | - | - | 1,2 | - | - | - | - | - |
| Glasfaser 1 | 30,0 | 30,0 | - | 30,0 | 30,0 | 30,0 | 30,0 | 30,0 |
| Glasfaser 2 | - | - | 30,0 | - | - | - | - | - |

| **Eigenschaften** | | | | | | | | |
|---|---|---|---|---|---|---|---|---|
| Schmelzpunkt [°C] | 307 | 298 | 312 | 295 | 300 | 288 | 290 | 283 |
| Glasübergangstemperatur [°C] | 13 | 100 | 123 | 93 | 93 | 94 | 81 | 85 |
| HDT A (1.8 MPa) [°C] | 241 | 210 | 265 | 259 | 261 | 242 | 256 | 251 |
| HDT C (8 MPa) [°C] | 136 | 101 | 153 | 162 | 166 | 162 | 158 | 157 |

**Tabelle 3: Mechanische Eigenschaften nach Wärmelagerung bei 220°C.**

| | B1 | VB1 | VB2 | B2 | B3 | B4 | VB3 | VB4 |
|---|---|---|---|---|---|---|---|---|
| **Mechanische Eigenschaften (nach 0 h)** | | | | | | | | |
| Zugmodul [MPa] | 10853 | 10704 | 10630 | 10363 | 10641 | 10512 | 10287 | 10416 |
| Bruchfestigkeit [MPa] | 203 | 196 | 195 | 203 | 209 | 200 | 201 | 206 |
| Bruchdehnung [%] | 2,3 | 2,3 | 2,3 | 2,8 | 2,6 | 2,5 | 2,8 | 2,8 |

| **Mechanische Eigenschaften (nach 1000 h) bei 220°C** | | | | | | | | |
|---|---|---|---|---|---|---|---|---|
| Zugmodul [MPa] | 12823 | 12481 | 11867 | 11203 | 10915 | 11395 | 11186 | 11429 |
| Bruchfestigkeit [MPa] | 120 | 110 | 77 | 130 | 118 | 118 | 138 | 115 |
| Bruchfestigkeit bezogen auf den Ausgangswert [%] | 59 | 56 | 39 | 64 | 56 | 59 | 69 | 56 |
| Bruchdehnung [%] | 1,3 | 1,2 | 0,8 | 1,4 | 1,3 | 1,3 | 1,4 | 1,1 |
| Bruchdehnung bezogen auf den Ausgangswert [%] | 57 | 52 | 35 | 50 | 50 | 52 | 50 | 39 |

Die Bestimmung der in den Tabellen 2 bis 3 angegebenen Eigenschaften und die Ermittlung der Speichermodulkurven erfolgte nach den folgenden Methoden.

### Bestimmung der Glasübergangstemperatur (Tg)

Die Differential Scanning Calorimetry (DSC) wurde mit einer Aufheizrate von 20°C/min durchgeführt. Für die Glasübergangsstemperatur (Tg) wird die Temperatur für den Onset angegeben. Die Bestimmung der Glasübergangstemperatur erfolgte auf einem DSC 2920 (Differential Scanning Calorimeter) der Firma TA Instruments gemäß ISO-Norm 11357 Teil 1+2. Als Spülgas wurde Stickstoff und als Kalibriersubstanz indium (Smp_{Onset}: 156,6°C, ΔH: 28,45 J/g) verwendet. Es wurden 10 mg der Probe in einen Tiegel aus Aluminium eingewogen und dieser verschlossen. Die Probe wurde dann zunächst mit 20°C/Minute über den Schmelzpunkt der Probe, d.h. mindestens 10°C höher als das Ende des Schmelzvorgangs, aufgeheizt und nach einer Minute Isothermal, mit 5°C/Minute auf Raumtemperatur abgekühlt. Anschliessend wurde erneut mit 20°C pro Minute über den Schmelzpunkt aufgeheizt und zur Bestimmung der Glasübergangstemperatur in festem Kohlendioxid abgeschreckt. Das Thermogramm wurde mit dem Programm Universal Analysis ausgewertet.

### Bestimmung des Schmelzpunktes

Die Bestimmung des Schmelzpunktes erfolgte gemäß der ISO-Norm 11357-11-2, Granulat. Die Differential Scanning Calorimetry (DSC) wurde mit einer Aufheizrate von 20°C/min durchgeführt.

### Bestimmung von HDT A (1.8 MPa) und HDT C (8 MPa):

Die Bestimmung von HDT A (1.8 MPa) und HDT C (8 MPa) erfolgte gemäß der ISO 75 an einem ISO-Schlagstab mit den Dimensionen 80x10x4 mm.

### Durchführung der Wärmelagerung

Die Wärmelagerungen wurden in belüfteten, elektrisch beheizten Einzelkammer-Wärmeschränken nach IEC 60216-4-1 bei 180°C oder 230°C an ISO-Zugstäben (Norm: ISO 3167, Typ A, 170 x 20/10 x 4 mm) durchgeführt. Nach den in Tabelle 3 angegebenen Zeiten wurden Probekörper dem Ofen entnommen und nach Abkühlen auf 23°C nach den oben angegebenen Methoden geprüft.

### Bestimmung des Zugmoduls

Die Bestimmung des Zugmoduls erfolgte gemäß der ISO 527 mit einer Zuggeschwindigkeit von 1 mm/min an einem ISO-Zugstab gemäß der Norm ISO 3167, Typ A mit den Dimensionen 170 x 20/10 x 4 mm bei einer Temperatur von 23 °C.

### Bestimmung der Bruchfestigkeit und Bruchdehnung

Die Bestimmung der Bruchfestigkeit und Bruchdehnung erfolgte gemäß der ISO 527 mit einer Zuggeschwindigkeit von 5 mm/min an einem ISO-Zugstab gemäß der Norm ISO 3167, Typ A mit den Dimensionen 170 x 20/10 x 4 mm bei einer Temperatur von 23 °C.

### Bestimmung der Speichermodulkurven

Die Speichermodulkurven wurden gemäß ISO 6721 auf einem Rheometer (Physica MCR 301 der Anton Paar GmbH) an Prüfkörpern der Abmessung 60 x 10 x 1 mm mit einer Frequenz von 1 Hz und einer Aufheizrate von 4°C/Minute ermittelt.

Wie ein Vergleich von Beispiel B1 mit den Vergleichsbeispielen VB1 und VB2 aus Tabelle 2 zeigt, werden durch den Zusatz der erfindungsgemäßen Komponente (A2) in den erfindungsgemäßen Mengen der Schmelzpunkt und die Glasübergangstemperatur der Komponente (A1) wesentlich schwächer abgesenkt, als wenn größere Mengen von Komponente (A2) zugegeben werden. Auch die Wärmeformbeständigkeit (HDT A) der erfindungsgemäßen Formmassen bleibt über 240°C.

Ein Vergleich von Beispiel B2 mit Vergleichsbeispiel VB4 zeigt, dass bei gleichem Gesamtlactamgehalt ein höherer Schmelzpunkt und eine höhere Glasübergangstemperatur erreicht werden, wenn die erfindungsgemäße Komponente (A2) anstatt Caprolactam zugesetzt wird. Auch der Vergleich von Beispiel B4 mit Vergleichsbeispiel VB3 zeigt, dass durch Zusatz von Komponente (A2) eine höhere Glasübergangstemperatur erreicht wird, als durch Zusatz von Caprolactam.

Wie Tabelle 3 zeigt weisen die erfindungsgemäßen PA-Formmassen aus den Beispielen B1 bis B4 eine vergleichbar gute Wärmealterungsbeständigkeit auf, wie die Formmassen aus den Vergleichsbeispielen VB1 bis VB4.

Durch die spezielle Merkmalskombination der vorliegenden Erfindung wird eine vergleichbar gute Wärmealterungs- und Wärmeformbeständigkeit wie bei den Formmassen aus dem Stand der Technik gewährleistet, völlig überraschend werden dabei höhere Glasübergangstemperaturen und höhere Schmelzpunkte erreicht.

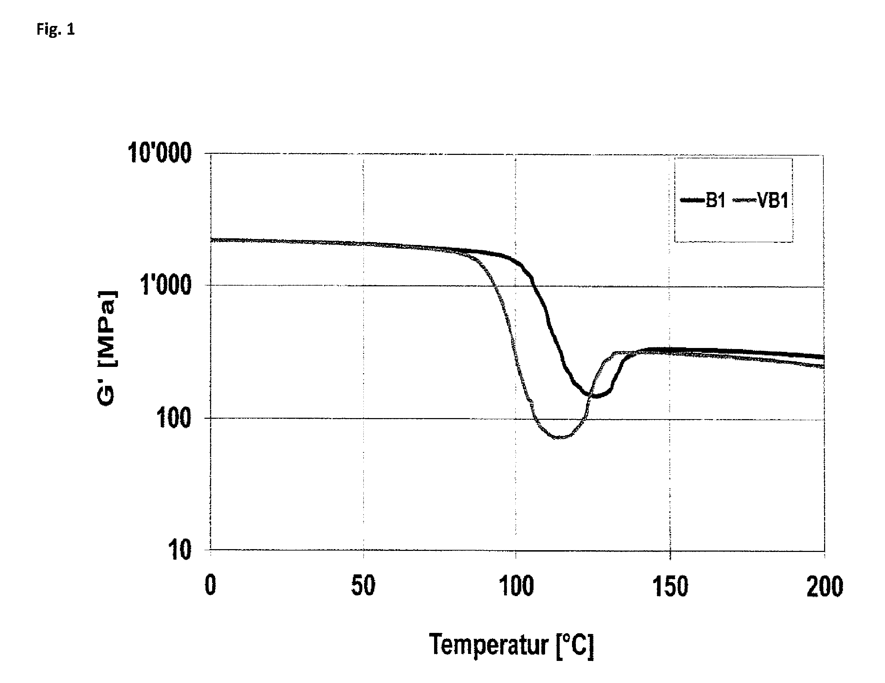

Die für den Einsatz in der Praxis vorteilhaften Eigenschaften einer höheren Glasübergangstemperatur, nämlich die Verwendbarkeit bei höheren Temperaturen wird durch einen Vergleich der Speichermodulkurven (Fig. 1) von B1 mit VB1 belegt. Der Speichermodul von VB2 bricht bereits bei Temperaturen von 92°C ein und fällt unter 1000 MPa, wohingegen bei B1 auch bei 106°C noch ein Speichermodul von >1000 MPa erhalten bleibt. Ausserdem ist aus den Kurven ersichtlich, dass bei den erfindungsgemässen Zusammensetzungen eine bessere Kaltkristallisation eintritt.

## Patentansprüche

1. Polyamid-Formmasse mit folgender Zusammensetzung:
(A) 27 bis 84,99 Gew.-% einer Polyamidmischung bestehend aus
(A1)mindestens einem teilaromatischen, teilkristallinen sich vom Copolyamid 6.T/6 unterscheidenden Polyamid mit einem Schmelzpunkt im Bereich von 255 bis 330°C,
(A2) mindestens einem Copolyamid 6.T/6 mit einem Gehalt an Caprolactam von wenigstens 30 Gew.-%,
wobei der Gesamtcaprolactamgehalt, d.h. die Summe des in Polyamid (A1) und Copolyamid (A2) enthaltenen Caprolactams, 3 bis 21.9 Gew.-%, bezogen auf die Polyamidmischung, beträgt,
(B) 15 bis 65 Gew.-% mindestens eines Füll- und Verstärkungsmittels,
(C) 0,01 bis 3,0 Gew.-% mindestens eines Wärmestabilisators,
(D) 0 bis 5,0 Gew.-% mindestens eines Additivs,
wobei sich die Komponenten (A) bis (D) auf 100 Gew.-% ergänzen und der Polyamid-Formmasse keine Metallsalze und/oder Metalloxide eines Übergangsmetalls der Gruppe VB, VIB, VIIB oder VIIIB des Periodensystems zugesetzt sind

2. Polyamid-Formmasse nach Anspruch 1, **dadurch gekennzeichnet, dass** der Gesamtcaprolactamgehalt, d.h. die Summe des in Polyamid (A1) und Copolyamid 6.T/6 (A2) enthaltenen Caprolactams 5 bis 20 Gew.-%und besonders bevorzugt 7 bis 18 Gew.-%, bezogen auf die Polyamidmischung beträgt.

3. Polyamid-Formmasse nach einem der vorhergehenden Ansprüche, **dadurch gekennzeichnet, dass** die Polyamid-Formmasse 30 bis 79,9 Gew.-%, bevorzugt 35 bis 70 Gew.-% der Polyamidmischung (A) enthält.

4. Polyamid-Formmasse nach einem der vorhergehenden Ansprüche, **dadurch gekennzeichnet, dass** die Polyamid-Formmasse bei Temperaturen von mindestens 93°C, bevorzugt von mindestens 98°C und besonders bevorzugt von mindestens 105°C einen Speichermodul von >1000 MPa aufweist.

5. Polyamid-Formmasse nach einem der vorhergehenden Ansprüche, **dadurch gekennzeichnet, dass** das mindestens eine teilaromatische, teilkristalline Polyamid (A1) einen Schmelzpunkt im Bereich von 270 bis 325°C, bevorzugt im Bereich von 280 bis 320°C und/oder eine Glasübergangstemperatur im Bereich von 90 bis 140°C, bevorzugt im Bereich von 110 bis 140°C, besonders bevorzugt im Bereich von 115 bis 135°C aufweist.

6. Polyamid-Formmasse nach einem der vorhergehenden Ansprüche, **dadurch gekennzeichnet, dass** das mindestens eine teilaromatische, teilkristalline Polyamid (A1) eine Lösungsmittelviskosität ηᵣₑₗ von höchstens 2,6, bevorzugt von 1,45 bis 2,3, weiter bevorzugt von 1,5 bis 2,0, insbesondere von 1,5 bis 1,8 aufweist.

7. Polyamid-Formmasse nach einem der vorhergehenden Ansprüche, **dadurch gekennzeichnet, dass** das mindestens eine teilaromatische, teilkristalline Polyamid (A1) aus
a) Dicarbonsäuren, die bezogen auf die Gesamtmenge der Dicarbonsäuren mindestens 50 mol-% Terephthalsäure beinhalten,
b) Diaminen, die bezogen auf die Gesamtmenge der Diamine mindestens 80 mol-% aliphatische Diamine mit 4 bis 18 Kohlenstoffatomen, bevorzugt 6 bis 12 Kohlenstoffatomen beinhalten, sowie gegebenenfalls
c) Lactamen und/oder Aminocarbonsäuren hergestellt ist, wobei das Copolyamid 6.T/6 ausgeschlossen ist.

8. Polyamid-Formmasse nach einem der vorhergehenden Ansprüche, **dadurch gekennzeichnet, dass** das mindestens eine teilaromatische, teilkristalline Polyamid (A1) aus
a) 50 bis 100 mol-% Terephthalsäure und/oder Naphthalindicarbonsäure sowie 0 bis 50 mol-% mindestens einer aliphatischen Dicarbonsäure mit 6 bis 12 Kohlenstoffatomen, und/oder 0 bis 50 mol-% mindestens einer cycloaliphatischen Dicarbonsäure mit 8 bis 20 Kohlenstoffatomen, und/oder 0 bis 50 mol-% Isophthalsäure, bezogen auf die Gesamtmenge der Dicarbonsäuren
b) 80 bis 100 mol-% mindestens eines aliphatischen Diamins mit 4 bis 18 Kohlenstoffatomen, vorzugsweise mit 6 bis 12 Kohlenstoffatomen sowie 0 bis 20 mol-% mindestens eines cycloaliphatischen Diamins, vorzugsweise mit 6 bis 20 Kohlenstoffatomen, und/oder 0 bis 20 mol-% mindestens eines araliphatischen Diamins, wie z.B. PACM, MACM, IPDA, MXDA und PXDA, bezogen auf die Gesamtmenge der Diamine sowie gegebenenfalls,
c) Aminocarbonsäuren und/oder Lactamen je mit 6 bis 12 Kohlenstoffatomen,
hergestellt ist.

9. Polyamid-Formmasse nach einem der vorhergehenden Ansprüche, **dadurch gekennzeichnet, dass** das mindestens eine teilaromatische, teilkristalline Polyamid (A1) ausgewählt ist aus der Gruppe bestehend aus PA 4T/4I, PA 4T/6I, PA 5T/5I, PA 6T/6I, PA 6T/6I/6, PA 6T/66, PA 6T/610, PA 10T/106, PA 6T/612, PA 6T/10T, PA 6T/10I, PA 9T, PA 10T, PA 12T, PA 10T/10I, PA10T/12, PA10T/11, PA 6T/9T, PA 6T/12T, PA 6T/10T/6I, PA 6T/6I/6, PA 6T/6I/12 sowie Mischungen davon.

10. Polyamid-Formmasse nach einem der vorhergehenden Ansprüche, **dadurch gekennzeichnet dass** das mindestens eine caprolactamhaltige Copolyamid 6.T/6 (A2) einen Gehalt an Caprolactam von wenigstens 50 Gew.-%, bevorzugt wenigstens 60 Gew.-% aufweist.

11. Polyamid-Formmasse nach einem der vorhergehenden Ansprüche, **dadurch gekennzeichnet dass** das mindestens eine caprolactamhaltige Copolyamid 6.T/6 (A2) eine Lösungsmittelviskosität ηᵣₑₗ im Bereich von 1.5 bis 3.0, bevorzugt im Bereich von 1.6 bis 2.5, insbesondere im Bereich von 1.8 bis 2.2 aufweist.

12. Polyamid-Formmasse nach einem der vorhergehenden Ansprüche, **dadurch gekennzeichnet dass** das mindestens eine Füll- und Verstärkungsmittel (B) ausgewählt ist aus der Gruppe bestehend aus
a) Glas- und/oder Kohlenstofffasern, bevorzugt mit einer Länge im Bereich von 0,2 bis 50 mm und/oder einem Durchmesser von 5 bis 40 µm und/oder Endlosfasern (Rovings),
b) teilchenförmigen Füllstoffen, vorzugsweise mineralischen Füllstoffen auf Basis von natürlichen und/oder synthetischen Schichtsilikaten, Talk, Glimmer, Silikat, Quarz, Titandioxid, Wollastonit, Kaolin, amorphen Kieselsäuren, Magnesiumcarbonat, Magnesiumhydroxid, Kreide, Kalk, Feldspat, Bariumsulfat, Voll- oder Hohl-Glaskugeln oder gemahlenem Glas, dauerhaft magnetische bzw. magnetisierbare Metallverbindungen und/oder Legierungen und/oder Mischungen hieraus sowie
c) Mischungen hiervon.

13. Polyamid-Formmasse nach einem der vorhergehenden Ansprüche, **dadurch gekennzeichnet dass** der mindestens eine Wärmestabilisator (C) ausgewählt ist aus der Gruppe bestehend aus
a) Verbindungen des ein- oder zweiwertigen Kupfers, z.B. Salze des ein- oder zweiwertigen Kupfers mit anorganischen oder organischen Säuren oder ein- oder zweiwertigen Phenolen, die Oxide des ein- oder zweiwertigen Kupfers, oder Komplexverbindungen von Kupfersalzen mit Ammoniak, Aminen, Amiden, Lactamen, Cyaniden oder Phosphinen, bevorzugt Cu(I)- oder Cu(II)-Salze der Halogenwasserstoffsäuren, der Cyanwasserstoffsäuren oder die Kupfersalze der aliphatischen Carbonsäuren, besonders bevorzugt CuCl, CuBr, Cul, CuCN und Cu₂O, CuCl₂, CuSO₄, CuO, Kupfer(II)acetat oder Kupfer(II)stearat,
b) Stabilisatoren auf Basis sekundärer aromatischer Amine,
c) Stabilisatoren auf Basis sterisch gehinderter Phenole
d) Phosphite und Phosphonite sowie
e) Mischungen hiervon.

14. Formkörper hergestellt aus einer Polyamid-Formmasse nach einem der vorhergehenden Ansprüche, bevorzugt in Form eines Bauteils für den Automobil- oder Elektro/Elektronikbereich, insbesondere Zylinderkopfhauben, Motorabdeckungen, Gehäuse für Ladeluftkühler, Ladeluftkühlerklappen, Ansaugrohre, Ansaugkrümmer, Konnektoren, Zahnräder, Lüfterräder, Kühlwasserkästen, Gehäuse oder Gehäuseteil für Wärmetauscher, Kühlmittelkühler, Ladeluftkühler, Thermostat, Wasserpumpe, Heizkörper, Befestigungsteile, in Form eines elektrischen oder elektronischen Bauteils, einer Leiterplatte, einem Teil einer Leiterplatte, eines Gehäusebestandteils, einer Folie, einer Leitung, insbesondere in Form eines Schalters, eines Verteilers, eines Relais, eines Widerstandes, eines Kondensators, einer Spule, einer Lampe, einer Dioden, einer LED, eines Transistors, eines Konnektors, eines Reglers, eines Speichers und/oder eines Sensors.

## Claims

1. A polyamide molding material having the following composition:
(A) 27 to 84.99% by weight of a polyamide mixture comprising
(A1) at least one partially aromatic, partially crystalline polyamide differing from copolyamide 6.T/6 having a melting point in the range from 255 to 330°C;
(A2) at least one copolyamide 6.T/6 having a content of caprolactam of at least 30% by weight,
wherein the total caprolactam content, i.e. the sum of the caprolactam contained in polyamide (A1) and copolyamide (A2), amounts to 3 to 30% by weight with reference to the polyamide mixture;
(B) 15 to 65% by weight of at least one filling and strengthening agent;
(C) 0.01 to 3.0% by weight of at least one heat stabilizer;
(D) 0 to 5.0% by weight of at least one additive,
wherein the components (A) to (D) amount to 100% by weight, and wherein no metal salts and/or metal oxides of a transition metal of the group VB, VIB, VIIB or VIIIB of the periodic system are added to the polyamide molding material.

2. A polyamide molding material in accordance with claim 1, **characterized in that** the total caprolactam content, i.e. the sum of the caprolactam contained in polyamide (A1) and copolyamide 6.T/6 (A2) amounts to 3 to 21.9% by weight, preferably 5 to 20% by weight, and particularly preferably 7 to 18% by weight, with respect to the polyamide mixture.

3. A polyamide molding material in accordance with one of the preceding claims, **characterized in that** the polyamide molding material contains 30 to 79.9% by weight, preferably 35 to 70% by weight, of the polyamide mixture (A).

4. A polyamide molding material in accordance with one of the preceding claims, **characterized in that** the polyamide molding material has a storage modulus of > 1000 MPa at temperatures of at least 93°C, preferably of at least 98°C, and particularly preferably of at least 105°C.

5. A polyamide molding material in accordance with one of the preceding claims, **characterized in that** the at least one partially aromatic, partially crystalline polyamide (A1) has a melting point in the range from 270 to 325°C, preferably in the range from 280 to 320°C, and/or a glass transition temperature in the range from 90 to 140°C, preferably in the range from 110 to 140°C, particularly preferably in the range from 115 to 135°C.

6. A polyamide molding material in accordance with one of the preceding claims, **characterized in that** the at least one partially aromatic, partially crystalline polyamide (A1) has a solvent viscosity ηᵣₑₗ of at most 2.6, preferably of 1.45 to 2.3, further preferably from 1.5 to 2.0, in particular from 1.5 to 1.8.

7. A polyamide molding material in accordance with one of the preceding claims, **characterized in that** the at least one partially aromatic, partially crystalline polyamide (A1) is manufactured from
a) dicarboxylic acids which contain at least 50 mol% terephthalic acid with respect to the total quantity of the dicarboxylic acids;
b) diamines which contain at least 80 mol% aliphatic diamines having 4 to 18 carbon atoms, preferably 6 to 12 carbon atoms, with respect to the total quantity of the diamines, as well as optionally
c) lactams and/or aminocarboxylic acids,
wherein the copolyamide 6.T/6 being precluded.

8. A polyamide molding material in accordance with one of the preceding claims, **characterized in that** the at least one partially aromatic, partially crystalline polyamide (A1) is manufactured from
a) 50 to 100 mol% terephthalic acid and/or naphthalene dicarboxylic acid as well as 0 to 50 mol% of at least one aliphatic dicarboxylic acid having 6 to 12 carbon atoms and/or 0 to 50 mol% of at least one cycloaliphatic dicarboxylic acid having 8 to 20 carbon atoms, and/or 0 to 50 mol% isophthalic acid, with respect to the total quantity of the dicarboxylic acids.
b) 80 to 100 mol% of at least one aliphatic diamine having 4 to 18 carbon atoms, preferably having 6 to 12 carbon atoms, as well as 0 to 20 mol% of at least one cycloaliphatic diamine, preferably having 6 to 20 carbon atoms, and/or 0 to 20 mol% of at least one araliphatic diamine such as PACM, MACM, IPDA, MXDA and PXDA, with respect to the total quantity of the diamines, as well as, optionally,
c) aminocarboxylic acids and/or lactams each having 6 to 12 carbon atoms.

9. A polyamide molding material in accordance with one of the preceding claims, **characterized in that** the at least one partially aromatic, partially crystalline polyamide (A1) is selected from the group comprising PA 4T/41, PA 4T/6I, PA 5T/5I, PA 6T/6I, PA 6T/6I/6, PA 6T/66, PA 6T/610, PA 10T/106, PA 6T/612, PA 6T/10T, PA 6T/101, PA 9T, PA 10T, PA 12T, PA 10T/10I, PA10T/12, PA10T/11, PA 6T/9T, PA 6T/12T, PA 6T/10T/6I, PA 6T/61/6, PA 6T/6I/12 and mixtures thereof.

10. A polyamide molding material in accordance with one of the preceding claims, **characterized in that** the at least one copolyamide 6.T/6 containing caprolactam (A2) has a content of caprolactam of at least 50% by weight, preferably at least 60% by weight.

11. A polyamide molding material in accordance with one of the preceding claims, **characterized in that** the at least one copolyamide 6.T/6 containing caprolactam (A2) has a solvent viscosity ηᵣₑₗ in the range from 1.6 to 3.0, preferably in the range from 1.7 to 2.5, in particular in the range from 1.8 to 2.2.

12. A polyamide molding material in accordance with one of the preceding claims, **characterized in that** the at least one filling and strengthening agent (B) is selected from the group comprising
a) glass fibers and/or carbon fibers, preferably having a length in the range from 0.2 to 50 mm and/or having a diameter of 5 to 40 µm and/or endless fibers (rovings);
b) particle-like fillers, preferably mineral fillers based on natural and/or synthetic phyllosilicates, talc, mica, silicate, quartz, titanium dioxide, wollastonite, kaolin, amorphous silicic acids, magnesium carbonate, magnesium hydroxide, chalk, lime, feldspar, barium sulfate, solid or hollow glass balls or ground glass, permanently magnetic or magnetizable metal compounds and/or alloys or mixtures thereof.
c) mixtures thereof.

13. A polyamide molding material in accordance with one of the preceding claims **characterized in that** the at least one heat stabilizer (C) is selected from the group comprising
a) compounds of monovalent or divalent copper, e.g. salts of monovalent or divalent copper having inorganic or organic acids or monovalent or divalent phenols, the oxides of monovalent or divalent copper, or complex compounds of copper salts such with ammonia, amines, amides, lactams, cyanides or phosphines, preferably Cu(I) salts or Cu(II) salts of halogen hydracids, hydrocyanic acids or copper salts of aliphatic carboxylic acids, particularly preferably CuCl, CuBr, Cul, CuCN und Cu₂O, CuCl₂, CuSO₄, CuO, copper-(II)-acetate or copper-(III)-stearate;
b) stabilizers based on secondary aromatic amines;
c) stabilizers based on sterically hindered phenols;
d) phosphites and phosphonites as well as
e) mixtures thereof.

14. A mold manufactured from a polyamide molding material in accordance with one of the preceding claims preferably in the form of a component for the automotive sector or electrical/electronic sector, in particular cylinder head covers, engine covers, housings for air intercoolers, air intercooler valves, intake pipes, intake manifolds, connectors, cogs, fan wheels, cooling water boxes, housings or housing parts for heat exchangers, coolant coolers, air intercoolers, ther mostat, water pump, heaters, fastening parts, in the form of an electrical or electronic component, a circuit board, a part of a circuit board, a housing component, a film, a line, in particular in the form of a switch, a distributor, a relay, a resistor, a capacitor, a coil, a lamp, a diode, an LED, a transistor, a connector, a regulator, a store and/or a sensor.

## Revendications

1. Mélange à mouler de polyamides ayant la composition suivante :
(A) 27 à 84,99 % en poids d'un mélange de polyamides constitué
(A1) d'au moins un polyamide partiellement aromatique, partiellement cristallin, se distinguant du polyamide 6.T/6, ayant un point de fusion compris dans la plage de 255 à 330°C,
(A2) d'au moins un copolyamide 6.T/6 ayant une teneur en caprolactame d'au moins 30 % en poids,
la teneur totale en caprolactame, c'est-à-dire la somme du caprolactame contenu dans le polyamide (A1) et dans le copolyamide (A2), étant de 3 à 21,9 % en poids par rapport au mélange de polyamides,
(B) 15 à 65 % en poids d'au moins une matière de charge et de renforcement,
(C) 0,01 à 3,0 % en poids d'au moins un stabilisant thermique,
(D) 0 à 5,0 % en poids d'au moins un additif,
les composants (A) à (D) se complétant à 100 % en poids, et le mélange à mouler de polyamides n'étant additionné d'aucun sel métallique et/ou oxyde métallique d'un métal de transition du Groupe VB, VIB, VIIB ou VIIIB du Tableau Périodique.

2. Mélange à mouler de polyamides selon la revendication 1, **caractérisé en ce que** la teneur totale en caprolactame, c'est-à-dire la somme du caprolactame contenu dans le polyamide (A1) et dans le copolyamide 6.T/6 (A2), est de 5 à 20 % en poids et d'une manière particulièrement préférée de 7 à 18 % en poids, par rapport au mélange de polyamides.

3. Mélange à mouler de polyamides selon l'une des revendications précédentes, **caractérisé en ce que** le mélange à mouler de polyamides contient 30 à 79,9 % en poids, de préférence de 35 à 70 % en poids, du mélange de polyamides (A).

4. Mélange à mouler de polyamides selon l'une des revendications précédentes, **caractérisé en ce que** le mélange à mouler de polyamides présente, à des températures d'au moins 93°C, de préférence d'au moins 98°C et d'une manière particulièrement préférée d'au moins 105°C, un module de conservation > 1000 MPa.

5. Mélange à mouler de polyamides selon l'une des revendications précédentes, **caractérisé en ce que** le ou les polyamides (A1) partiellement aromatiques, partiellement cristallins, présentent un point de fusion compris dans la plage de 270 à 325°C, de préférence dans la plage de 280 à 320°C et/ou une température de transition vitreuse comprise dans la plage de 90 à 140°C, de préférence dans la plage de 110 à 140°C, d'une manière particulièrement préférée dans la plage de 115 à 135°C.

6. Mélange à mouler de polyamides selon l'une des revendications précédentes, **caractérisé en ce que** le ou les polyamides (A1) partiellement aromatiques, partiellement cristallins, présentent une viscosité dans un solvant ηᵣₑₗ au plus de 2,6, de préférence de 1,45 à 2,3, d'une manière plus préférée de 1,5 à 2,0, en particulier de 1,5 à 1,8.

7. Mélange à mouler de polyamides selon l'une des revendications précédentes, **caractérisé en ce que** le ou les polyamides (A1) partiellement aromatiques, partiellement cristallins, sont fabriqués à partir
a) d'acides dicarboxyliques, qui par rapport à la quantité totale des acides dicarboxyliques contiennent au moins 50 % en moles d'acide téréphtalique,
b) de diamines, qui par rapport à la quantité totale des diamines contiennent au moins 80 % en moles de diamines aliphatiques ayant 4 à 18 atomes de carbone, de préférence 6 à 12 atomes de carbone, ainsi que, éventuellement,
c) de lactames et/ou d'acides aminocarboxyliques,
à l'exclusion du copolyamide 6.T/6.

8. Mélange à mouler de polyamides selon l'une des revendications précédentes, **caractérisé en ce que** le ou les polyamides (A1) partiellement aromatiques, partiellement cristallins, sont fabriqués à partir
a) de 50 à 100 % en moles d'acide téréphtalique et/ou d'acide naphtalènedicarboxylique, ainsi que de 0 à 50 % en moles d'au moins un acide dicarboxylique aliphatique ayant 6 à 12 atomes de carbone, et/ou de 0 à 50 % en moles d'au moins un acide dicarboxylique cycloaliphatique ayant 8 à 20 atomes de carbone, et/ou de 0 à 50 % en moles d'acide isophtalique, par rapport à la quantité totale des acides dicarboxyliques,
b) de 80 à 100 % en moles d'au moins une diamine aliphatique ayant 4 à 18 atomes de carbone, de préférence 6 à 12 atomes de carbone, ainsi que de 0 à 20 % en moles d'au moins une diamine cycloaliphatique, ayant de préférence 6 à 20 atomes de carbone, et/ou de 0 à 20 % en moles d'au moins une diamine araliphatique telle que par exemple le PACM, le MACM, l'IPDA, le MXDA et le PXDA, par rapport à la quantité totale des diamines, ainsi que, éventuellement,
c) d'acides aminocarboxyliques et/ou de lactames ayant chacun 6 à 12 atomes de carbone.

9. Mélange à mouler de polyamides selon l'une des revendications précédentes, **caractérisé en ce que** le polyamide (A1) partiellement aromatique, partiellement cristallin, est choisi dans le groupe consistant en le PA 4T/4I, le PA 4T/6I, le PA 5T/5I, le PA 6T/6I, le PA 6T/6I/6, le PA 6T/66, le PA 6T/610, le PA 10T/106, le PA 6T/612, le PA 6T/10T, le PA 6T/10I, le PA 9T, le PA 10T, le PA 12T, le PA 10T/10I, le PA 10T/12, le PA 10T/11, le PA 6T/9T, le PA 6T/12T, le PA 6T/10T/6I, le PA 6T/6I/6, le PA 6T/6I/12, ainsi que les mélanges de ceux-ci.

10. Mélange à mouler de polyamides selon l'une des revendications précédentes, **caractérisé en ce que** le ou les copolyamides 6.T/6 (A2) contenant du caprolactame présentent une teneur en caprolactame d'au moins 50 % en poids, de préférence d'au moins 60 % en poids.

11. Mélange à mouler de polyamides selon l'une des revendications précédentes, **caractérisé en ce que** le ou les copolyamides 6.T/6 (A2) contenant du caprolactame présentent une viscosité dans un solvant ηᵣₑₗ comprise dans la plage de 1,5 à 3,0, de préférence dans la plage de 1,6 à 2,5, en particulier dans la plage de 1,8 à 2,2.

12. Mélange à mouler de polyamides selon l'une des revendications précédentes, **caractérisé en ce que** la ou les matières de charge et de renforcement (B) sont choisies dans le groupe consistant en
a) les fibres de verre et/ou de carbone, ayant de préférence une longueur comprise dans la plage de 0,2 à 50 mm et/ou un diamètre de 5 à 40 µm, et/ou les fibres continues (rovings),
b) les charges particulaires, de préférence les charges minérales à base de phyllosilicates naturels et/ou synthétiques, de talc, de mica, de silicate, de quartz, de dioxyde de titane, de wollastonite, de kaolin, de silices amorphes, de carbonate de magnésium, d'hydroxyde de magnésium, de craie, de chaux, de feldspath, de sulfate de baryum, de billes de verre pleines ou creuses ou de verre pilé, de composés métalliques aimantables ou à aimantation permanente, et/ou d'alliages et/ou de mélanges de ceux-ci, ainsi que
c) les mélanges de ceux-ci.

13. Mélange à mouler de polyamides selon l'une des revendications précédentes, **caractérisé en ce que** le ou les stabilisants thermiques (C) sont choisis dans le groupe consistant en
a) les composés du cuivre mono- ou divalent, par exemple les sels du cuivre mono- ou divalent et d'acides inorganiques ou organiques ou des mono- ou diphénols, les oxydes du cuivre mono- ou divalent, ou les composés complexes de sels de cuivre et d'ammoniac, d'amines, d'amides, de lactames, de cyanures ou de phosphines, de préférence les sels de Cu(I) ou de Cu(II) des acides halogène-hydriques, des acides cyanhydriques, ou les sels de cuivre des acides carboxyliques aliphatiques, d'une manière particulièrement préférée le CuCl, le CuBr, le CuI, le CuCN et le Cu₂O, le CuCl₂, le CuSO₄, le CuO, l'acétate de cuivre(II) ou le stéarate de cuivre(II),
b) les stabilisants à base d'amines aromatiques secondaires,
c) les stabilisants à base de phénols à empêchement stérique,
d) les phosphites et les phosphonites, ainsi que
e) les mélanges de ceux-ci.

14. Objets moulés fabriqués à partir d'un mélange à mouler de polyamides selon l'une des revendications précédentes, de préférence sous forme d'un composant pour le domaine automobile ou électrique/électronique, en particulier les couvercles supérieurs de soupape, les capots moteurs, les carters de refroidisseurs d'air de suralimentation, les clapets de refroidisseurs d'air de suralimentation, les tubulures d'admission, les collecteurs d'admission, les connecteurs, les roues dentées, les roues de ventilateur, les caissons d'eau de refroidissement, les carters et parties de carters pour échangeurs de chaleur, les refroidisseurs de liquide de refroidissement, les refroidisseurs d'air de suralimentation, le thermostat, la pompe à eau, le radiateur, les pièces de fixation, sous forme d'un composant électrique ou électronique, d'une carte imprimée, d'une partie d'une carte imprimée, d'un constituant de carter, d'une feuille, d'une ligne, en particulier d'un commutateur, d'un répartiteur, d'un relais, d'une résistance, d'un condensateur, d'une bobine, d'une lampe, d'une diode, d'une LED, d'un transistor, d'un connecteur, d'un régulateur, d'un accumulateur et/ou d'un capteur.
